# EUROPÄISCHE PATENTSCHRIFT

(11) **EP 1 964 743 B1**
(45) Veröffentlichungstag und Bekanntmachung des Hinweises auf die Patenterteilung: **10.04.2019**
(21) Anmeldenummer: 08003533.0
(22) Anmeldetag: 27.02.2008
(51) Int. Cl.: B60T 15/48, B60T 17/00

(54) **DRUCKLUFTVERSORGUNGSEINRICHTUNG FÜR EIN NUTZFAHRZEUG UND VERFAHREN ZUM BETREIBEN EINER DRUCKLUFTVERSORGUNGSEINRICHTUNG**
COMPRESSED AIR SUPPLY DEVICE FOR A COMMERCIAL VEHICLE AND METHOD FOR OPERATING A COMPRESSED AIR SUPPLY DEVICE
DISPOSITIF D'ALIMENTATION EN AIR COMPRIMÉ POUR UN VÉHICULE UTILITAIRE ET PROCÉDÉ DE FONCTIONNEMENT D'UN DISPOSITIF D'ALIMENTATION EN AIR COMPRIMÉ

(30) Priorität: 27.02.2007 DE 102007009768
(43) Veröffentlichungstag der Anmeldung: 03.09.2008
(73) Patentinhaber: KNORR-BREMSE Systeme für Nutzfahrzeuge GmbH, 80809 München (DE)
(72) Erfinder: Schnittger, Karsten, 80935 München (DE); Krinner, Wolfgang, 80807 München (DE)
(74) Vertreter: Schönmann, Kurt

(56) Entgegenhaltungen:
- EP-A2- 1 527 974
- DE-A1- 10 342 978
- US-A1- 2006 244 305

## Beschreibung

Die Erfindung betrifft eine Druckluftversorgungseinrichtung für ein Nutzfahrzeug mit einem mit einem Kompressor koppelbaren Drucklufteingang, einer mit dem Drucklufteingang über eine Förderleitung gekoppelten Filtereinheit, einem mit einem Ablassausgang und der Förderleitung gekoppelten Ablassventil, einem mit einem Steuereingang des Kompressors koppelbaren Energiesparsteuerausgang, einer ersten Ventileinrichtung und einer zweiten Ventileinrichtung, wobei durch die Ventileinrichtungen das Ablassventil, der Energiesparsteuerausgang und die Regeneration der Filtereinheit steuerbar sind.

Weiterhin betrifft die Erfindung ein Verfahren zum Betreiben einer Druckluftversorgungseinrichtung mit einem mit einem Kompressor koppelbaren Drucklufteingang, einer mit dem Drucklufteingang über eine Förderleitung gekoppelten Filtereinheit, einem mit einem Ablassausgang und der Förderleitung gekoppelten Ablassventil, einem mit einem Steuereingang des Kompressors koppelbaren Energiesparsteuerausgang, einer ersten Ventileinrichtung und einer zweiten Ventileinrichtung, wobei im Rahmen des Verfahrens vorgesehen ist, dass durch die Ventileinrichtungen das Ablassventil, der Energiesparsteuerausgang und die Regeneration der Filtereinheit gesteuert werden.

Derartige Druckluftversorgungseinrichtungen erfüllen in Nutzfahrzeugen zahlreiche Aufgaben. Hierzu gehören insbesondere die Versorgung der Bremsanlage und weiterer Druckluftverbraucher mit trockener gereinigter Druckluft, die Wahrnehmung einer Mehrkreisschutzventilfunktion zur Absicherung verschiedener Verbraucherkreise gegeneinander und zur Sicherstellung einer bestimmten Füllreihenfolge sowie die Bereitstellung einer Druckreglerfunktion. Die von den Druckluftverbrauchern genutzte Druckluft wird primär durch einen Kompressor zur Verfügung gestellt, der im Allgemeinen durch den Verbrennungsmotor des Nutzfahrzeugs angetrieben wird. Bei zahlreichen Systemen lässt sich der Kompressor in einen energiesparenden Zustand überführen, entweder durch Trennen einer Kupplung, über die der Kompressor mit dem Verbrennungsmotor gekoppelt sein kann, oder durch pneumatische Ansteuerung eines Kompressorsteuereingangs, um den Kompressor in einen Leerlaufzustand zu überführen. Derartige energiesparende Maßnahmen können noch dadurch unterstützt werden, dass die Betriebsabläufe in der Druckluftversorgungseinrichtung möglichst so stattfinden, dass einmal erzeugte Druckluft nicht unnötig verloren geht. Dabei ist zu beachten, dass ein gewisser Druckluftverlust unumgänglich ist, denn die Filtereinheit der Druckluftversorgungseinrichtung muss immer wieder regeneriert werden. Zu diesem Zweck wird trockene Druckluft aus den an die Druckluftversorgungseinrichtungen angeschlossenen Druckluftbehältern in einer Richtung durch die Filtereinheit geleitet, die der Förderrichtung entgegengesetzt ist. Die durch die Filtereinheit strömende Luft nimmt die Feuchtigkeit in der Filtereinheit zumindest zum Teil auf, um dann über das Ablassventil der Druckluftversorgungseinrichtung ins Freie zu strömen.

Bei bestimmten Systemen des Standes der Technik ist vorgesehen, den Energiesparbetriebszustand an das Öffnen des Ablassventils zu koppeln, das heißt immer dann, wenn der Kompressor in einen energiesparenden Zustand überführt wird, wird auch das Ablassventil geöffnet, so dass es hierdurch zu einem unnötigen Druckverlust in der gesamten Förderleitung vor einem den Verbrauchern zugewandten Rückschlagventil, das stromabwärts der Filtereinheit angeordnet ist, kommt.

Die EP 1 318 936 B1 beschreibt eine Druckluftversorgungseinrichtung, die mit einer Regenerationsfunktion und einem Energiesparausgang zum Überführen eines Kompressors in einen Leerlaufzustand ausgestattet ist. Es sind zwei Magnetventile vorgesehen, die diese Funktionen realisieren. Dabei ist vorgesehen, dass das Öffnen des Regenerationsluftpfades mit dem Öffnen des Ablassventils gekoppelt ist. Auf diese Weise geht die Druckluft aus dem Volumen zwischen dem Ablassventil und einem stromabwärts von der Filtereinheit angeordneten, den Verbrauchern zugewandten Rückschlagventils nur dann verloren, wenn dies aufgrund der geforderten Regeneration unumgänglich ist.

Eine weitere Druckluftversorgungseinrichtung ist aus DE 10342 978 A1 bekannt.

Der Erfindung liegt die Aufgabe zugrunde, eine Druckluftversorgungseinrichtung mit hohem Energiesparpotential und einer Steigerung ihrer Funktionalität gegenüber dem Stand der Technik gegenüberzustellen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass durch die erste Ventileinrichtung das Ablassventil und durch die zweite Ventileinrichtung der Energiesparsteuerausgang und die Regeneration der Filtereinheit steuerbar sind. Indem das Ablassventil vollkommen unabhängig von dem Einleiten der Regenerationsfunktion beziehungsweise dem Überführen des Kompressors in seinen Leerlaufzustand betätigt wird, kann sichergestellt werden, dass das Druckluftvolumen in der Förderleitung vor dem den Verbrauchern zugewandten Rückschlagventil nur dann verloren geht, wenn dies aufgrund der geforderten Betriebszustände unumgänglich ist. Es kann somit sichergestellt werden, dass beim Betrieb der Druckluftversorgungseinrichtung nur der Druck verloren geht, der für die Realisierung einer Regenerationsfunktion benötigt wird.

Nützlicherweise ist vorgesehen, dass die erste Ventileinrichtung ein 3/2-Wegeventil ist, das in einem ersten Schaltzustand einen Steuereingang des Ablassventils entlüftet und in einem zweiten Schaltzustand den Steuereingang des Ablassventils belüftet, und dass das Ablassventil durch Belüften des Steuereingangs in einen geöffneten Zustand überführbar ist. Im nicht angesteuerten Zustand ist das Ablassventil somit geschlossen. Ein Öffnen findet nur dann statt, wenn es aufgrund der Regeneration unvermeidlich ist oder wenn es zum Darstellen anderer Funktionalitäten erwünscht ist.

Es ist bevorzugt, dass die zweite Ventileinrichtung ein 3/2-Wegeventil ist, das in einem ersten Schaltzustand den Steuereingang eines an den Energiesparsteuerausgang gekoppelten Kompressors entlüftet sowie einen Regenerationspfad sperrt und in einem zweiten Schaltzustand den Steuereingang des an den Energiesparsteuerausgang gekoppelten Kompressors belüftet sowie einen Regenerationspfad freigibt, und dass der Kompressor durch Belüften des Steuereingangs in einen Energiesparzustand überführbar ist. Der Kompressor wird also genau dann in seinen Energiesparzustand überführt, wenn durch Umschalten der zweiten Ventileinrichtung die Regeneration eingeleitet werden soll oder wenn andere Funktionalitäten zur Verfügung gestellt werden sollen, die dann von dem Schaltzustand der ersten Ventileinrichtung abhängen.

Durch die Bereitstellung von zwei Ventileinrichtungen mit jeweils zwei Schaltzuständen liegen insgesamt vier mögliche Betriebszustände vor, wobei vorgesehen ist, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Förderbetriebszustand vorliegt. Der Regenerationspfad ist geschlossen, der Kompressor befindet sich in seiner Lastlaufphase, und das Ablassventil ist geschlossen.

Des Weiteren ist vorgesehen, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt. Der Regenerationsluftpfad ist geöffnet, das Ablassventil ist geöffnet, und der Kompressor befindet sich in seiner Leerlaufphase.

Weiterhin ist vorgesehen, dass in einem dritten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein Sperrbetriebszustand vorliegt. Der Kompressor befindet sich in seiner Leerlaufphase und der Regenerationsluftpfad, das heißt ein Pfad, der das den Verbraucherkreisen zugewandte auf die Filtereinheit folgende Rückschlagventil umgeht, ist geöffnet. Jedoch ist das Ablassventil geschlossen, so dass ein Abströmen von Luft verhindert wird.

Ferner ist vorgesehen, dass in einem vierten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Spülbetriebszustand vorliegt. Der Regenerationsluftpfad ist geschlossen und der Kompressor fördert. Weiterhin ist das Ablassventil geöffnet, so dass der Kompressor zumindest keinen wesentlichen Druck in der Druckluftversorgungseinrichtung aufbaut, sondern durch das Ablassventil ins Freie fördert.

Von besonderem Vorzug ist, dass eine elektronische Steuereinheit vorgesehen ist und dass die Ventileinrichtungen Magnetventile sind. Auf diese Weise können die verschiedenen Betriebszustände der Druckluftversorgungseinrichtung auf der Grundlage intelligenter Berechnungen eingenommen werden, wobei insbesondere zahlreiche das Nutzfahrzeug betreffende Informationen berücksichtigt werden können.

Die Erfindung baut auf dem gattungsgemäßen Verfahren dadurch auf, dass durch die erste Ventileinrichtung das Ablassventil und durch die zweite Ventileinrichtung der Energiesparsteuerausgang und die Regeneration der Filtereinheit gesteuert werden. Auf diese Weise werden die Vorteile und Besonderheiten der erfindungsgemäßen Druckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses zeichnet sich besonders dadurch aus, dass die erste Ventileinrichtung ein 3/2-Wegeventil ist, das in einem ersten Schaltzustand einen Steuereingang des Ablassventils entlüftet und in einem zweiten Schaltzustand den Steuereingang des Ablassventils belüftet, und dass das Ablassventil durch Belüften des Steuereingangs in einen geöffneten Zustand überführt wird.

Weiterhin kann nützlich vorgesehen sein, dass die zweite Ventileinrichtung ein 3/2-Wegeventil ist, das in einem ersten Schaltzustand den Steuereingang eines an den Energiesparsteuerausgang gekoppelten Kompressors entlüftet sowie einen Regenerationspfad sperrt und in einem zweiten Schaltzustand den Steuereingang des an den Energiesparsteuerausgang gekoppelten Kompressors belüftet und einen Regenerationspfad freigibt, und dass der Kompressor durch Belüften des Steuereingangs in einen Energiesparzustand überführt wird.

Das erfindungsgemäße Verfahren ist in vorteilhafter Weise dadurch weitergebildet, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Förderbetriebszustand vorliegt.

Weiterhin ist vorgesehen, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt.

Es ist bevorzugt, dass in einem dritten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein Sperrbetriebszustand vorliegt.

Weiterhin ist von Vorteil, dass in einem vierten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Spülbetriebszustand vorliegt.

Nützlicherweise ist vorgesehen, dass die Ventileinrichtungen durch eine elektronische Steuereinheit angesteuert werden.

Die Erfindung wird nun mit Bezug auf die begleitende Zeichnung anhand besonders bevorzugter Ausführungsformen beispielhaft erläutert.

Es zeigt:

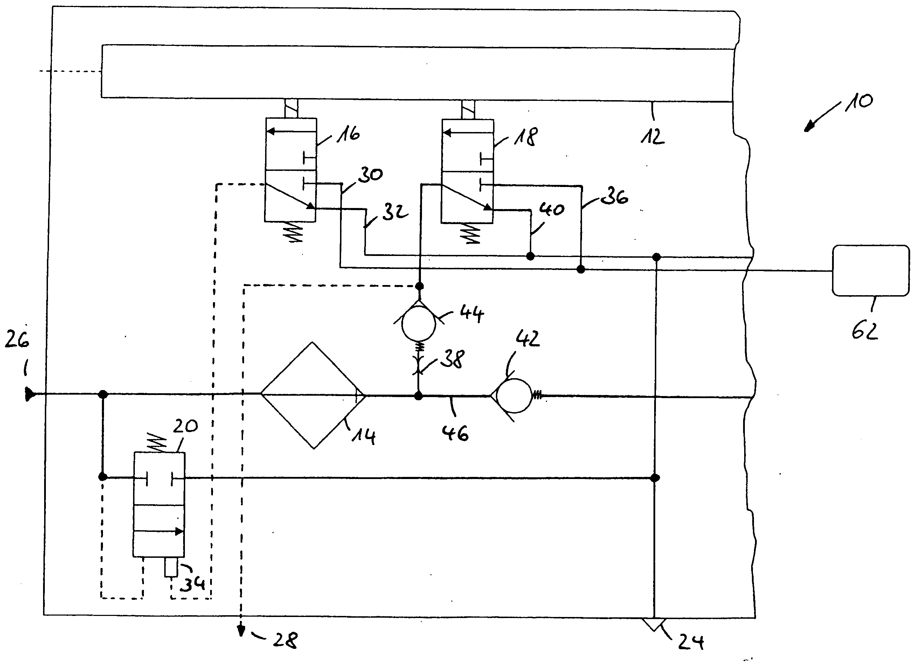

- Figur 1: eine schematische Teildarstellung einer erfindungsgemäßen Druckluftversorgungseinrichtung.

Die Druckluftversorgungseinrichtung 10 enthält eine elektronische Steuereinheit 12. Von der elektronischen Steuereinheit 12 sind zwei 3/2-Wege-Magnetventile 16, 18 ansteuerbar. Weitere Komponenten, beispielsweise eine Heizung, Drucksensoren und weitere Magnetventile, die im Zusammenhang mit der elektronischen Steuereinheit 12 vorgesehen sein können, sind nicht dargestellt. Die Druckluftversorgungseinrichtung hat einen mit einem Kompressor koppelbaren Drucklufteingang 26 und einen Ablassausgang 24. Zwischen dem Drucklufteingang 26 und dem Ablassausgang 24 ist ein Ablassventil 20 angeordnet. Mit dem Drucklufteingang 26 steht weiterhin eine Filtereinheit 14 in Verbindung. Über diese Filtereinheit 14 wird die dem Drucklufteingang 26 zugeführte Druckluft den Verbraucherkreisen zugeleitet, wobei auf diesem Pfad ein Rückschlagventil 42 vorgesehen ist, das ein Rückströmen von Druckluft aus den Verbraucherkreisen verhindert. Stellvertretend für die Verbraucherkreise ist ein Druckluftbehälter 62 dargestellt, wobei die Befüllung des Druckluftbehälters 62 aus der mit dem Rückschlagventil 42 gekoppelten Leitung im Allgemeinen über eine in die Druckluftversorgungseinrichtung eingebundene hier nicht dargestellte Mehrkreisschutzventileinrichtung erfolgt. Die Druckluftversorgungseinrichtung 10 hat weiterhin einen Energiesparsteuerausgang 28, an dem ein Steuereingang des mit dem Drucklufteingang 26 gekoppelten Kompressors angeschlossen werden kann.

Das erste Magnetventil 16 ist mit einer Leitung 30 verbunden, die zu dem Druckluftbehälter 62 führt und die somit unter normalen Betriebsbedingungen unter Betriebsbremsdruck steht. Eine weitere Leitung 32 ist an das Magnetventil 16 angeschlossen, wobei diese mit dem Ablassausgang 24 verbunden ist. Der dritte Anschluss des Magnetventils 16 steht mit einem Steuereingang 34 des Ablassventils 20 in Verbindung. Ein erster Anschluss des zweiten Magnetventils 18 ist über eine Leitung 36 mit dem Druckluftbehälter 62 verbunden. Über eine Leitung 40 steht ein zweiter Anschluss des Magnetventils 18 mit dem Ablassausgang 24 in Verbindung. Der dritte Anschluss des Magnetventils 18 ist über ein Rückschlagventil 44 und eine Drossel 38 mit einem Abschnitt der Förderleitung 46 verbunden, der, bezogen auf die Strömungsrichtung der Druckluft während der Förderphase, stromabwärts der Filtereinheit 14 und stromaufwärts bezüglich des Rückschlagventils 42 angeordnet ist. Weiterhin steht der dritte Anschluss des Magnetventils 18 mit dem Energiesparsteuerausgang 28 in Verbindung.

Sind die Magnetventile 16, 18 stromlos, so nehmen sie ihren im unteren Teil des Ventilsymbols dargestellten Schaltzustand ein, während die Magnetventile 16, 18 im bestromten Zustand den im oberen Teil des Ventilsymbols dargestellten Schaltzustand realisieren.

Sind beide Magnetventile 16, 18 stromlos, so ist der Steuereingang 34 des Ablassventils 20 über das Magnetventil 16 entlüftet. Ebenfalls ist der Energiesparsteuerausgang 28 über das Magnetventil 18 entlüftet. Weiterhin ist ein Regenerationsluftpfad, der von dem Druckluftbehälter 62 über das Magnetventil 18, das Rückschlagventil 44 und die Drossel 38 realisiert werden kann, geschlossen. Dieser Schaltzustand ist ein Förderbetriebszustand, bei dem Druck in der Druckluftversorgungseinrichtung sowie in den angeschlossenen Druckluftkreisen aufgebaut wird.

Werden beide Magnetventile 16, 18 bestromt, so wird der Steuereingang 34 des Ablassventils 40 belüftet, so dass das Ablassventil 20 öffnet. Weiterhin wird der Regenerationsluftpfad vom Druckluftbehälter 32 über die Leitung 36, das Magnetventil 18, das Rückschlagventil 44, die Drossel 38 und die Filtereinheit 14 in Richtung Ablassventil 20 geöffnet, so dass eine Durchströmung der Filtereinheit 14 gegen die Förderströmungsrichtung erfolgen kann. Gleichzeitig wird der Energiesparsteuerausgang 28 belüftet, so dass der mit dem Drucklufteingang 26 in Verbindung stehende Kompressor in seinen Leerlaufzustand überführt wird. Durch die Bestromung beider Magnetventile 16, 18 wird folglich ein Regenerationsbetriebszustand realisiert.

Ist das erste Magnetventil 16 unbestromt, während das zweite Magnetventil 18 bestromt ist, so ist der Steuereingang 32 des Ablassventils 20 entlüftet und das Ablassventil 20 daher geschlossen. Der Regenerationspfad über das zweite Magnetventil 18 ist zwar, soweit die Umgehung des Rückschlagventils 42 betroffen ist, offen, aufgrund des geschlossenen Ablassventils 20 kann jedoch kein Abströmen von Druckluft erfolgen. Der mit dem Energiesparsteuerausgang 28 in Verbindung stehende Steuereingang des Kompressors ist belüftet, und der Kompressor befindet sich im Leerlaufzustand. Die so vorliegende Schaltung stellt einen Sperrbetriebszustand dar.

Ist das erste Magnetventil 16 bestromt, während das zweite Magnetventil 18 stromlos ist, so ist das Ablassventil 20 aufgrund der Belüftung des Steuereingangs 34 geöffnet. Der Regenerationsluftpfad über das Magnetventil 18 ist geschlossen, und die Energiesparfunktion des Kompressors ist nicht aktiviert, da der Steuereingang des Kompressors über den Energiesparsteuerausgang 28 und das Magnetventil 18 entlüftet ist. Ein solcher Betriebszustand stellt einen Spülbetriebszustand dar, bei dem der Kompressor zwar fördert, jedoch ohne wesentlichen Druckaufbau in der Druckluftversorgungseinrichtung, sondern über das Ablassventil 20 und den Ablassausgang 24 ins Freie.

Auf der Grundlage der vorliegenden Erfindung wird somit ein unnötiges Entleeren des Leitungsvolumens zwischen dem Rückschlagventil 42 und dem Ablassventil 20 außerhalb der Regenerationsphasen vermieden, es sei denn, ein Spülbetrieb wird durch gezieltes Bestromen des ersten Magnetventils 16 und Stromloshalten des zweiten Magnetventils 18 herbeigeführt. Insofern wird ein unnötiger Druckluftverlust vermieden, und die Funktionalität der Druckluftversorgungseinrichtung wird im Vergleich zum Stand der Technik erweitert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Steuereinheit
- 14: Filtereinheit
- 16: Magnetventil
- 18: Magnetventil
- 20: Ablassventil
- 24: Ablassausgang
- 26: Drucklufteingang
- 28: Energiesparsteuerausgang
- 30: Leitung
- 32: Leitung
- 34: Steuereingang
- 36: Leitung
- 38: Drossel
- 40: Leitung
- 42: Rückschlagventil
- 44: Rückschlagventil
- 46: Förderleitungsabschnitt

## Patentansprüche

1. Druckluftversorgungseinrichtung (10) für ein Nutzfahrzeug mit
- einem mit einem Kompressor koppelbaren Drucklufteingang (26),
- einer mit dem Drucklufteingang (26) über eine Förderleitung gekoppelten Filtereinheit (14),
- einem mit einem Ablassausgang (24) und der Förderleitung gekoppelten Ablassventil (20),
- einem mit einem Steuereingang des Kompressors koppelbaren Energiesparsteuerausgang (28),
- einer ersten Ventileinrichtung (16) und einer zweiten Ventileinrichtung (18), wobei durch die Ventileinrichtungen (16, 18) das Ablassventil (20), der Energiesparsteuerausgang (28) und die Regeneration der Filtereinheit (14) steuerbar sind,
**dadurch gekennzeichnet, dass** durch die erste Ventileinrichtung (16) das Ablassventil (20) und durch die zweite Ventileinrichtung (18) der Energiesparsteuerausgang (28) und die Regeneration der Filtereinheit (14) steuerbar sind.

2. Druckluftversorgungseinrichtung (10) nach Anspruch 1, **dadurch gekennzeichnet, dass** die erste Ventileinrichtung (16) ein 3/2-Wegeventil ist, das in einem ersten Schaltzustand einen Steuereingang (34) des Ablassventils (20) entlüftet und in einem zweiten Schaltzustand den Steuereingang des Ablassventils belüftet, und dass das Ablassventil durch Belüften des Steuereingangs in einen geöffneten Zustand überführbar ist.

3. Druckluftversorgungseinrichtung (10) nach Anspruch 1 oder 2, **dadurch gekennzeichnet, dass** die zweite Ventileinrichtung ein 3/2-Wegeventil ist, das in einem ersten Schaltzustand den Steuereingang eines an den Energiesparsteuerausgang (28) gekoppelten Kompressors entlüftet sowie einen Regenerationspfad sperrt und in einem zweiten Schaltzustand den Steuereingang des an den Energiesparsteuerausgang gekoppelten Kompressors belüftet sowie einen Regenerationspfad freigibt, und dass der Kompressor durch Belüften des Steuereingangs in einen Energiesparzustand überführbar ist.

4. Druckluftversorgungseinrichtung (10) nach Anspruch 3, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

5. Druckluftversorgungseinrichtung (10) nach Anspruch 3 oder 4, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

6. Druckluftversorgungseinrichtung (10) nach einem der Ansprüche 3 bis 5, **dadurch gekennzeichnet, dass** in einem dritten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein Sperrbetriebszustand vorliegt.

7. Druckluftversorgungseinrichtung (10) nach einem der Ansprüche 3 bis 6, **dadurch gekennzeichnet, dass** in einem vierten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Spülbetriebszustand vorliegt.

8. Druckluftversorgungseinrichtung (10) nach einem der vorhergehenden Ansprüche, **dadurch gekennzeichnet, dass** eine elektronische Steuereinheit (12) vorgesehen ist und dass die Ventileinrichtungen (16, 18) Magnetventile sind.

9. Verfahren zum Betreiben einer Druckluftversorgungseinrichtung (10) mit einem mit einem Kompressor koppelbaren Drucklufteingang (26), einer mit dem Drucklufteingang über eine Förderleitung gekoppelten Filtereinheit (14), einem mit einem Ablassausgang (24) und der Förderleitung gekoppelten Ablassventil (20), einem mit einem Steuereingang des Kompressors koppelbaren Energiesparsteuerausgang (28), einer ersten Ventileinrichtung (16) und einer zweiten Ventileinrichtung (18), wobei im Rahmen des Verfahrens vorgesehen ist, dass durch die Ventileinrichtungen (16, 18) das Ablassventil (20), der Energiesparsteuerausgang (28) und die Regeneration der Filtereinheit (14) gesteuert werden, **dadurch gekennzeichnet, dass** durch die erste Ventileinrichtung (16) das Ablassventil (20) und durch die zweite Ventileinrichtung (18) der Energiesparsteuerausgang (28) und die Regeneration der Filtereinheit (14) gesteuert werden.

10. Verfahren nach Anspruch 9, **dadurch gekennzeichnet, dass** die erste Ventileinrichtung (16) ein 3/2-Wegeventil ist, das in einem ersten Schaltzustand einen Steuereingang (34) des Ablassventils (20) entlüftet und in einem zweiten Schaltzustand den Steuereingang des Ablassventils belüftet, und dass das Ablassventil durch Belüften des Steuereingangs in einen geöffneten Zustand überführt wird.

11. Verfahren nach Anspruch 9 oder 10, **dadurch gekennzeichnet, dass** die zweite Ventileinrichtung ein 3/2-Wegeventil ist, das in einem ersten Schaltzustand den Steuereingang eines an den Energiesparsteuerausgang (28) gekoppelten Kompressors entlüftet sowie einen Regenerationspfad sperrt und in einem zweiten Schaltzustand den Steuereingang des an den Energiesparsteuerausgang gekoppelten Kompressors belüftet und einen Regenerationspfad freigibt, und dass der Kompressor durch Belüften des Steuereingangs in einen Energiesparzustand überführt wird.

12. Verfahren nach Anspruch 11, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

13. Verfahren nach Anspruch 11 oder 12, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

14. Verfahren nach einem der Ansprüche 11 bis 13, **dadurch gekennzeichnet, dass** in einem dritten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein Sperrbetriebszustand vorliegt.

15. Verfahren nach einem der Ansprüche 11 bis 14, **dadurch gekennzeichnet, dass** in einem vierten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Spülbetriebszustand vorliegt.

16. Verfahren nach einem der Ansprüche 9 bis 15, **dadurch gekennzeichnet, dass** die Ventileinrichtungen (16, 18) durch eine elektronische Steuereinheit (12) angesteuert werden.

## Claims

1. Compressed air supply device (10) for a utility vehicle, with
- a compressed air inlet (26) that can be coupled to a compressor,
- a filter unit (14) coupled to the compressed air inlet (26) by way of a delivery line,
- a discharge valve (20) coupled to a discharge outlet (24) and the delivery line,
- an energy-saver control outlet (28) that can be coupled to a control inlet of the compressor,
- a first valve device (16) and a second valve device (18), such that by means of the valve devices (16, 18) the discharge valve (20), the energy-saver control outlet (28) and the regeneration of the filter unit (14) can be controlled,
**characterised in that** the discharge valve (20) can be controlled by the first valve device (16), and the energy-saver control outlet (28) and the regeneration of the filter unit (14) can be controlled by the second valve device (18).

2. Compressed air supply device (10) according to Claim 1, **characterised in that** the first valve device (16) is a 3/2-way valve which in a first switching condition vents a control inlet (34) of the discharge valve (20) and in a second switching condition aerates the control inlet of the discharge valve, and by aerating the control inlet the discharge valve can be changed to an open condition.

3. Compressed air supply device (10) according to Claims 1 or 2, **characterised in that** the second valve device is a 3/2-way valve which in a first switching condition vents the control inlet of a compressor coupled to the energy-saver control outlet (28) and blocks a regeneration path, and in a second switching condition aerates the control inlet of the compressor coupled to the energy-saver control outlet and opens a regeneration path, and by aerating the control inlet the compressor can be changed to an energy-saving condition.

4. Compressed air supply device (10) according to Claim 3, **characterised in that** in a first operating condition of the compressed air supply device the first valve device (16) adopts its first switching condition and the second valve device (18) adopts its first switching condition, so producing a delivery operating condition.

5. Compressed air supply device (10) according to Claims3 or 4, **characterised in that** in a second operating condition of the compressed air supply device the first valve device (16) adopts its second switching condition and the second valve device (18) adopts its second switching condition, so producing a regeneration operating condition.

6. Compressed air supply device (10) according to any of Claims 3 to 5, **characterised in that** in a third operating condition of the compressed air supply device the first valve device (16) adopts it first switching condition and the second valve device (18) adopts its second switching condition, so producing a blocking operating condition.

7. Compressed air supply device (10) according to any of Claims 3 to 6, **characterised in that** in a fourth operating condition of the compressed air supply device the first valve device (16) adopts its second switching condition and the second valve device (18) adopts its first switching condition, so producing a flushing operating condition.

8. Compressed air supply device (10) according to any of the preceding claims, **characterised in that** an electronic control unit (12) is provided, and the valve devices (16, 18) are magnetic valves.

9. Method for operating a compressed air supply device (10) having a compressed air inlet (26) that can be coupled to a compressor, a filter unit (14) coupled to the compressed air inlet by way of a delivery line, a discharge valve (20) coupled to a discharge outlet (24) and the delivery line, an energy-saver control outlet (28) that can be coupled to a control inlet of the compressor, a first valve device (16) and a second valve device (18), wherein in the context of the method it is provided that by means of the valve devices (16, 18) the discharge valve (20), the energy-saver control outlet (28) and the regeneration of the filter unit (14) are controlled, **characterised in that** the discharge valve (20) is controlled by the first valve device (16), and the energy-saver control outlet (28) and the regeneration of the filter unit (14) are controlled by the second valve device (18).

10. Method according to Claim 9, **characterised in that** the first valve device (16) is a 3/2-way valve which in a first switching condition vents a control inlet (34) of the discharge valve (20) and in a second switching condition aerates the control inlet of the discharge valve, and by aerating the control inlet the discharge valve is changed to an open condition.

11. Method according to Claims 9 or 10, **characterised in that** the second valve device is a 3/2-way valve which in a first switching condition vents the control inlet of a compressor coupled to the energy-saver control outlet (28) and blocks a regeneration path, and in a second switching condition aerates the control inlet of the compressor coupled to the energy-saver control outlet and opens a regeneration path, and by aerating the control inlet the compressor is changed to an energy-saving condition.

12. Method according to Claim 11, **characterised in that** in a first operating condition of the compressed air supply device the first valve device (16) adopts its first switching condition and the second valve device (18) adopts its first switching condition, so producing a delivery operating condition.

13. Method according to Claims 11 or 12, **characterised in that** in a second operating condition of the compressed air supply device the first valve device (16) adopts its second switching condition and the second valve device (18) adopts its second switching condition, so producing a regeneration operating condition.

14. Method according to any of Claims 11 to 13, **characterised in that** in a third operating condition of the compressed air supply device the first valve device (16) adopts its first switching condition and the second valve device (18) adopts its second switching condition, so producing a blocking operating condition.

15. Method according to any of Claims 11 to 14, **characterised in that** in a fourth operating condition of the compressed air supply device the first valve device (16) adopts its second switching condition and the second valve device (18) adopts its first switching condition, so producing a flushing operating condition.

16. Method according to any of Claims 9 to 15, **characterised in that** the valve devices 16, 18) are controlled by an electronic control unit (12).

## Revendications

1. Dispositif (10) d'alimentation en air comprimé pour un véhicule utilitaire, comprenant
- une entrée (26) d'air comprimé, pouvant communiquer avec un compresseur,
- une unité (14) de filtration, pouvant communiquer avec l'entrée (26) d'air comprimé, par l'intermédiaire d'un conduit de transport,
- une vanne (20) de purge, communiquant avec une sortie (24) de purge et avec le conduit de transport,
- une sortie (28) de commande d'économie d'énergie, pouvant être reliée à une entrée de commande du compresseur,
- un premier dispositif (16) de vanne et un deuxième dispositif (18) de vanne, dans lequel la vanne (20) de purge, la sortie (28) de commande d'économie d'énergie et la régénération de l'unité (14) de filtration peuvent être commandées par les dispositifs (16, 18) de vanne,
**caractérisé en ce que** la sortie (28) et la régénération de l'unité (14) de filtration peuvent être commandées par le premier dispositif (16) de vanne.

2. Dispositif (10) d'alimentation en air comprimé suivant la revendication 1, **caractérisé en ce que** le premier dispositif (16) de vanne est une vanne à 3/2 voies, qui, dans un premier état de commutation, purge une entrée (34) de commande de la vanne (20) de purge et, dans un deuxième état de commutation, alimente en air l'entrée de commande de la vanne de purge et **en ce que** la vanne de purge peut, par alimentation en air de l'entrée de commande, passer dans un état ouvert.

3. Dispositif (10) d'alimentation en air comprimé suivant la revendication 1 ou 2, **caractérisé en ce que** le deuxième dispositif de vanne est une vanne à 3/2 voies, qui, dans un premier état de commutation, purge l'entrée de commande d'un compresseur communiquant avec la sortie (28) de commande d'économie d'énergie, ainsi que ferme un chemin de régénération, et dans un deuxième état de commutation, alimente en air l'entrée de commande du compresseur communiquant avec la sortie de commande d'économie d'énergie ainsi que bloque un chemin de régénération et **en ce que** le compresseur peut, par alimentation en air de l'entrée de commande, passer dans un état d'économie d'énergie.

4. Dispositif (10) d'alimentation en air comprimé suivant la revendication 3, **caractérisé en ce que**, dans un premier état de fonctionnement du dispositif d'alimentation en air comprimé, le premier dispositif (16) de vanne prend son premier état de commutation et le deuxième dispositif (18) de vanne prend son premier état de commutation, grâce à quoi on est dans un état de fonctionnement en transport.

5. Dispositif (10) d'alimentation en air comprimé suivant la revendication 3 ou 4, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, grâce à quoi on se trouve dans un état de fonctionnement en régénération.

6. Dispositif (10) d'alimentation en air comprimé suivant l'une des revendications 3 à 5, **caractérisé en ce que** dans le troisième état de fonctionnement du dispositif d'alimentation en air comprimé, le premier dispositif (16) de vanne prend son premier état de commutation et le deuxième dispositif (18) de vanne prend son deuxième état de commutation, grâce à quoi on se trouve dans un état de fonctionnement en blocage.

7. Dispositif (10) d'alimentation en air comprimé suivant l'une des revendications 3 à 6, **caractérisé en ce que**, dans un quatrième état de fonctionnement du dispositif d'alimentation d'air comprimé, le premier dispositif (16) de vanne prend son deuxième état de commutation et le deuxième dispositif (18) de vanne prend son premier état de commutation, grâce à quoi on se trouve dans un état de fonctionnement en balayage.

8. Dispositif (10) d'alimentation en air comprimé suivant l'une des revendications précédentes, **caractérisé en ce qu'**il est prévu une unité (12) électronique de commande et **en ce que** les dispositifs (16, 18) de vanne sont des électrovannes.

9. Procédé pour faire fonctionner un dispositif (10) d'alimentation en air comprimé, comprenant une entrée (26) d'air comprimé, pouvant communiquer avec un compresseur, une unité (14) de filtration, pouvant communiquer avec l'entrée (26) d'air comprimé, par l'intermédiaire d'un conduit de transport, une vanne (20) de purge, communiquant avec une sortie (24) de purge et avec le conduit de transport, une sortie (28) de commande d'économie d'énergie, pouvant être reliée à une entrée de commande du compresseur, un premier dispositif (16) de vanne et un deuxième dispositif (18) de vanne, dans lequel, dans le cadre du procédé, il est prévu de commander la vanne (20) de purge, la sortie (28) de commande d'économie d'énergie et la régénération de l'unité (14) de filtration par les dispositifs (16, 18) de vanne, **caractérisé en ce que** l'on commande la vanne (20) de purge par le premier dispositif (16) de vanne et la sortie (28) de commande d'économie d'énergie et la régénération de l'unité (14) de filtration par le deuxième dispositif (18) de vanne.

10. Procédé suivant la revendication 9, **caractérisé en ce que** le premier dispositif (16) de vanne est une vanne à 3/2 voies, qui, dans un premier état de commutation, purge une entrée (34) de commande de la vanne (20) de purge et, dans un deuxième état de commutation, alimente en air l'entrée de commande de la vanne de purge et **en ce que** l'on fait passer la vanne de purge dans un état ouvert en alimentant en air l'entrée de commande.

11. Procédé suivant la revendication 9 ou 10, **caractérisé en ce que** le deuxième dispositif de vanne est une vanne à 3/2 voies, qui, dans un premier état de commutation, purge l'entrée de commande d'un compresseur communiquant avec la sortie (28) de commande d'économie d'énergie, ainsi que ferme un chemin de régénération, et dans un deuxième état de commutation, alimente en air l'entrée de commande du compresseur communiquant avec la sortie de commande d'économie d'énergie ainsi que bloque un chemin de régénération et **en ce que** l'on fait passer le compresseur dans un état d'économie d'énergie en alimentant en air l'entrée de commande.

12. Procédé suivant la revendication 11, **caractérisé en ce que**, dans un premier état de fonctionnement du dispositif d'alimentation en air comprimé, le premier dispositif (16) de vanne prend son premier état de commutation et le deuxième dispositif (18) de vanne prend son premier état de commutation, grâce à quoi on est dans un état de fonctionnement en transport.

13. Procédé suivant la revendication 11 ou 12, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, grâce à quoi on se trouve dans un état de fonctionnement en régénération.

14. Procédé suivant l'une des revendications 11 à 13, **caractérisé en ce que** dans le troisième état de fonctionnement du dispositif d'alimentation en air comprimé, le premier dispositif (16) de vanne prend son premier état de commutation et le deuxième dispositif (18) de vanne prend son deuxième état de commutation, grâce à quoi on se trouve dans un état de fonctionnement de blocage.

15. Procédé suivant l'une des revendications 11 à 14, **caractérisé en ce que**, dans un quatrième état de fonctionnement du dispositif d'alimentation d'air comprimé, le premier dispositif (16) de vanne prend son deuxième état de commutation et le deuxième dispositif (18) de vanne prend son premier état de commutation, grâce à quoi on se trouve dans un état de fonctionnement en balayage.

16. Procédé suivant l'une des revendications 9 à 15, **caractérisé en ce que** l'on commande les dispositifs (16, 18) de vanne par une unité (12) électronique de commande.
